# EUROPEAN PATENT APPLICATION

(11) **EP 3 603 568 A1**
(43) Date of publication of application: **05.02.2020**
(21) Application number: 17904267.6
(22) Date of filing: 30.10.2017
(51) Int. Cl.: A61C 13/36

(54) **TRY-IN DENTURE, TRY-IN DENTURE MANUFACTURING PROGRAM, AND TRY-IN DENTURE MANUFACTURING METHOD**

(30) Priority: 30.03.2017 JP 2017068700
(71) Applicant: GC Corporation, Sunto-gun, Shizuoka 410-1307 (JP)
(72) Inventor: MICHII, Takayuki, Tokyo 174-8585 (JP); UENO, Takayuki, Tokyo 174-8585 (JP)
(74) Representative: Müller-Boré & Partner Patentanwälte PartG mbB
(86) International application number: PCT/JP2017/039145
(87) International publication number: WO 2018/179554

(57) **Abstract**

To provide try-in dentures which make it possible to adjust a bite more easily with high accuracy, a denture base part 12; a dentition part 13; an adjustment part 15; and a base part 14 are included, the adjustment part and the base part being separable from each other, and the adjustment part includes all of occlusal surfaces 13b of the dentition part, and a face 15a parallel to an occlusal plane 10a, the adjustment part being formed so that a movement of the adjustment part parallel to the occlusal plane with respect to the base part can be performed, a rotation of the adjustment part in the face parallel to the occlusal plane can be performed, or both the movement and the rotation can be performed.

## Description

### Technical Field

The present invention relates to try-in dentures, a program for making try-in dentures, and a method for making dentures.

### Background Art

One of well-known methods for making dentures is a lost wax technique, which is via the following steps, for example:
first, an impression of a patient's intraoral shape is taken by using an impression material (so-called impression taking). Plaster is poured to the impression and solidified, to make a plaster cast;
next, heights of dentures of the upper and lower jaws are secured by using wax on the obtained plaster cast, and artificial teeth are embedded in the wax, to form wax dentures (so called arrangement of artificial teeth); thereafter these wax dentures are embedded in plaster or the like to be solidified, and, after a portion for the wax flowing out is formed, the wax is melted and washed away using hot water or the like; whereby only the arranged artificial teeth remain, and a cavity is formed at the portion where the wax existed; then resin or the like is poured to (packed into) the cavity to be cured; and the plaster is broken and removed, which makes it possible to obtain dentures.
As described above, the lost wax technique includes a lot of steps, and it takes a long time until completion. In addition, it is said that dental technicians have to be skilled upon making dentures with this technique.

In contrast, Patent Literature 1 discloses an art of making dentures using CAD/CAM. That is, a process from design of dentures to determination of the steps of producing the dentures is treated as data using CAD/CAM. The dentures are finally obtained by cutting out with NC machine tool based on the data.

According to this, dentures can be made with less steps than the lost wax technique for a shorter time than before.

There are some methods for making a denture as described above. In every method, first, an impression of intraoral shape is taken and a bite is registered (an impression of intraoral shape is taken for securing stability of denture, and bite is registered to secure optimal occlusal of denture by accurate relationship between Maxilla and mandibular).
Specifically, in the case of a full denture, impressions of residual ridges of edentulous jaws are taken, which causes the obtained impression (especially of the jaw relation) to have low accuracy. In view of this, try-in is done for checking properness of occlusion by wax dentures in the pre-process of making final dentures. The jaw relation, and positions of artificial teeth are adjusted based on the result of try-in, to fabricate the final dentures. Patent Literature 1 also describes a matter relating to try-in.

### Citation List

### Patent Literature

Patent Literature 1: JP 5932803 B

### Summary of Invention

### Technical Problem

In making dentures using CAD/CAM, try-in dentures are generally produced with a 3D printer or a machine tool in the form of a united artificial tooth part and denture base part. Therefore, much effort is required and modification is difficult when the positional relationship between a residual ridge and an artificial tooth is not proper, or when the position of a dentition of an anterior teeth region is adjusted with respect to a facial appearance. As a result, in some cases, making dentures is started over because the accuracy of the final dentures cannot be improved enough.

An object of the present invention is to provide try-in dentures which make it possible to adjust a bite (jaw relation, and positions of artificial teeth) more easily with high accuracy. Also provided are a program for making these try-in dentures, and a method for making dentures.

### Solution to Problem

The present invention will be described below. Here, reference signs attached to the drawings are described together in parentheses for easy understanding. However, the present invention is not limited thereto.

A first aspect of the present invention is a try-in denture (10) to adjust an occlusal position for making a denture (30), the try-in denture comprising: a denture base part (12); a dentition part (13); an adjustment part (15); and a base part (14), the adjustment part and the base part being separable, wherein the adjustment part includes all of occlusal surfaces (13b) of the dentition part, and a face (15a) parallel to an occlusal plane (10a), the adjustment part being formed so that a movement of the adjustment part parallel to the occlusal plane with respect to the base part can be performed, a rotation of the adjustment part in the face parallel to the occlusal plane can be performed, or both the movement and the rotation can be performed.

In the try-in denture, the adjustment part (15) may include a part (15b') that engages the base part (14), and restricts at least one of the movement and the rotation within a predetermined range.

A second aspect of the present invention is a program for making a try-in denture (10) to adjust an occlusal position for making a denture (30), the program comprising: separating data on an adjustment part (15) and a base part (14) from data on a denture base part (12) and a dentition part (13), wherein the adjustment part includes all of occlusal surfaces (13b) of the dentition part, and a face (15a) parallel to an occlusal plane (10a), the adjustment part being formed so that a movement of the adjustment part parallel to the occlusal plane with respect to the base part can be performed, a rotation of the adjustment part in the face parallel to the occlusal plane can be performed, or both the movement and the rotation can be performed.

A third aspect of the present invention is a method for producing a denture (30), the method comprising: making a try-in denture (10) to adjust an occlusal condition, wherein the try-in denture includes a denture base part (12), a dentition part (13), an adjustment part (15), and a base part (14), the adjustment part and the base part being separable, and the adjustment part includes all of occlusal surfaces (13b) of the dentition part, and a face (15a) parallel to an occlusal plane (10a), the adjustment part being formed so that a movement of the adjustment part parallel to the occlusal plane with respect to the base part can be performed, a rotation of the adjustment part in the face parallel to the occlusal plane can be performed, or both the movement and the rotation can be performed.

### Advantageous Effects of Invention

According to the present invention, an adjustment part is moved and/or rotated, which makes it possible to adjust a bite (jaw relation, and positions of artificial teeth) as the whole of a dentition. Thus, try-in dentures can be more easily modified to the final dentures with high accuracy.

### Brief Description of Drawings

Fig. 1 is a side view of try-in dentures 10.
Fig. 2 is a front view of the try-in dentures 10.
Fig. 3A is a side view of a try-in denture on the upper jaw side 11, and Fig. 3B is an exploded side view of the try-in denture on the upper jaw side 11.
Fig. 4 is a plan view of the try-in denture on the upper jaw side 11 on the side of a dentition part 13.
Fig. 5A is a side view of a try-in denture on the lower jaw side 21, and Fig. 5B is an exploded view of the try-in denture on the lower jaw side 21.
Fig. 6A is a side view of a try-in denture on the upper jaw side 11', and Fig. 6B is an exploded side view of the try-in denture on the upper jaw side 11'.
Fig. 7A is a side view of dentures 30, and Fig. 7B is a front view of the dentures 30.
Fig. 8 is a front view of a denture on the upper jaw side 31 on the side of an artificial dentition 33.
Fig. 9 is a plan view of a denture base 32 on the side of recess parts 32b.
Fig. 10 shows an external appearance of an artificial tooth 33a.
Fig. 11 is a block diagram conceptually showing a design apparatus 50.
Fig. 12 shows a flow of a method for producing dentures S1.
Fig. 13 shows a flow of a step of designing dentures S20.
Fig. 14 shows a flow of a step of making the dentures S60.

### Description of Embodiments

The present invention will be described below based on the embodiments shown in the drawings. The present invention is not limited to these embodiments.

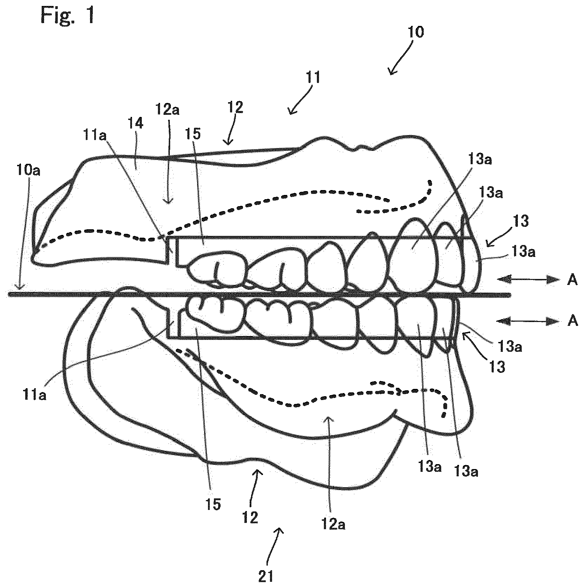

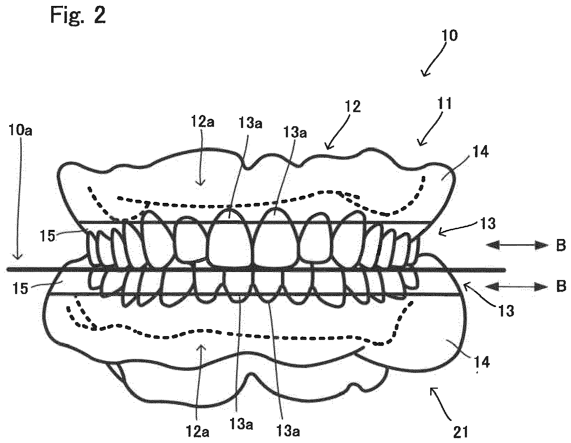

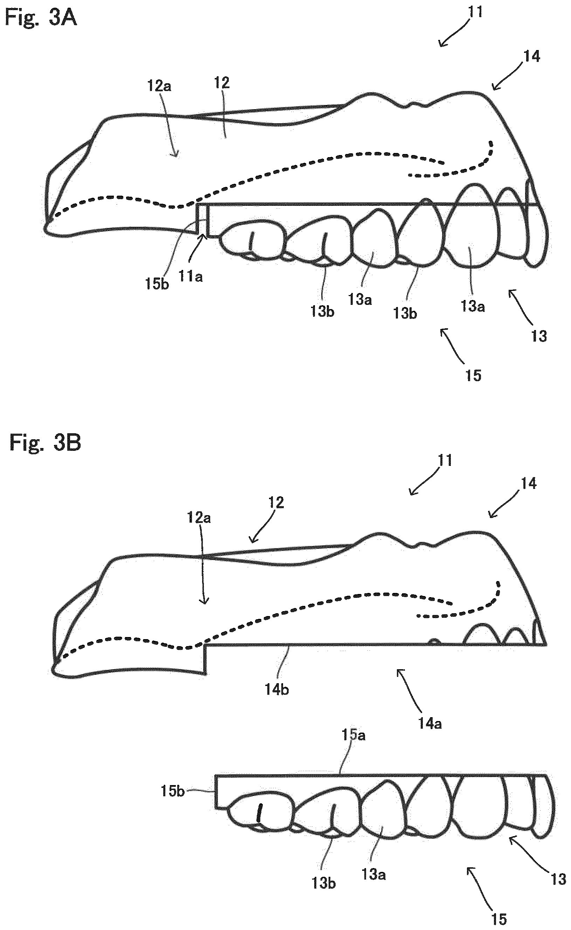

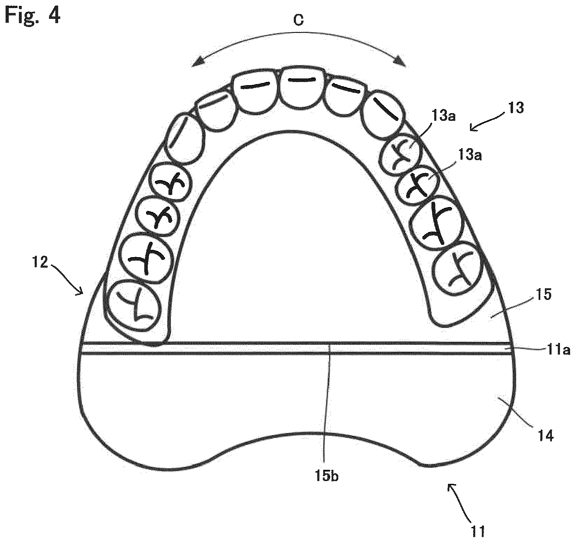

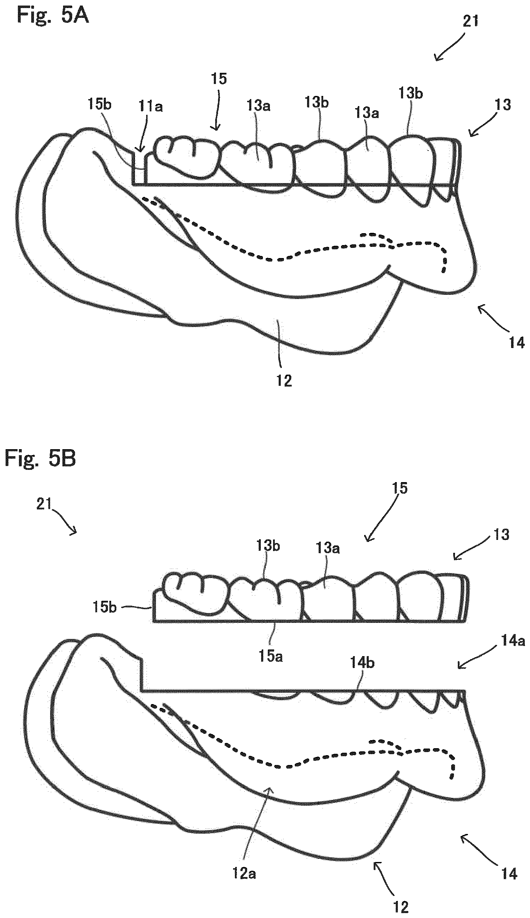

Figs. 1 to 5B are explanatory views of one embodiment, and show try-in dentures 10. Fig. 1 is a side view of the try-in dentures 10, and Fig. 2 is a front view of the try-in dentures 10. Fig. 3A is a side view of a try-in denture on the upper jaw side 11, Fig. 3B is an exploded side view of the try-in denture on the upper jaw side 11, and Fig. 4 is a plan view of the try-in denture on the upper jaw side 11 on the side of a dentition part 13. Fig. 5A is a side view of a try-in denture on the lower jaw side 21, and Fig. 5B is an exploded side view of the try-in denture on the lower jaw side 21.

The try-in dentures 10 are dentures made for try-in and used for adjustment of occlusal positions. Dentures are made based on the result of occlusal adjustment using the try-in dentures 10.

In the present embodiment, the try-in dentures 10 are constituted of the try-in denture on the upper jaw side 11 and the try-in denture on the lower jaw side 21.

The try-in denture on the upper jaw side 11 is a try-in denture for an upper jaw, and is constituted of a denture base part 12 and a dentition part 13. The try-in denture on the upper jaw side 11 is formed so as to be separable into a base part 14 and an adjustment part 15.

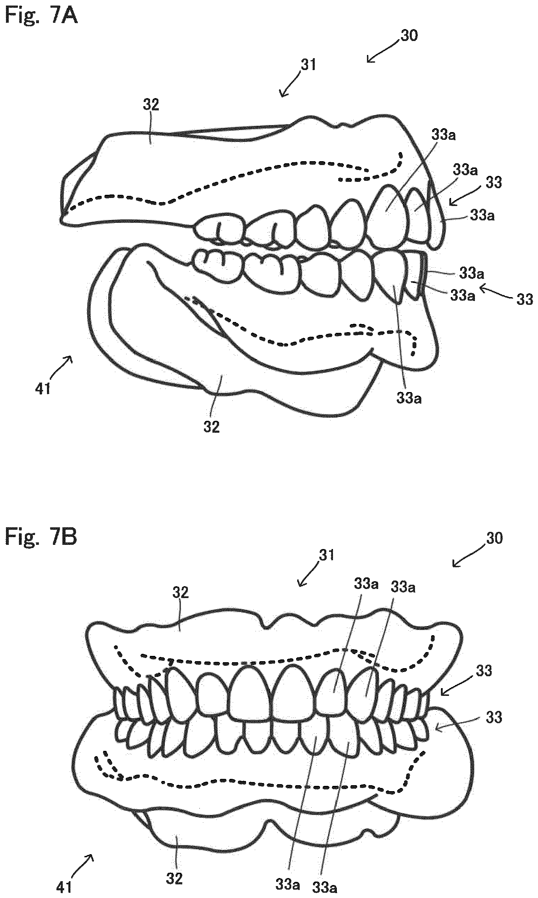

The denture base part 12 is a part having a shape corresponding to a part that is to be a denture base 32 of dentures 30 (see Fig. 7A to 8). Thus, the dentition part 13 is formed on one face of the denture base part 12, and a recess part 12a that corresponds to a shape of a residual ridge is formed on the other face thereof as shown by the dashed lines.

The dentition part 13 is a part having a shape corresponding to a part that is to be an artificial dentition 33 of the dentures 30 (see Figs. 7A to 8). Thus, a plurality of the artificial tooth parts 13a each of which corresponds to an individual artificial tooth 33a are arranged in the form of a dental arch, to form the dentition part 13. Each of the artificial tooth parts 13a of the dentition part 13 includes a bite surface 13b.

The denture base part 12 and the dentition part 13 have only to be integrally made from the same material. Only the external shape of the try-in dentures 10 is the matter, but material thereof is not a specific matter. Specific materials thereof are not especially restricted. Any material of resins (including photopolymerizable resins, a light source for curing which is visible light and ultraviolet light), thermoplastic resins, plaster, ceramics, metals, and wax-containing resins, waxes, and cellulosic materials such as paper which are only for temporary use, or at least two of them in combination may be employed.

The try-in denture on the upper jaw side 11 can be made with a 3D printer or a cutting machine (machine tool) that processes a final denture base.

The try-in denture on the upper jaw side 11 as described above is made so as to be separable into the base part 14 and the adjustment part 15.

The base part 14 includes a large part of or all of the denture base part 12 of the try-in denture on the upper jaw side 11, and has a cutout part 14a of cutting out a part that is to be the adjustment part 15 and a gap for adjustment 11a which will be described later, from the try-in denture on the upper jaw side 11. The base part 14 is formed so as not to include the occlusal surfaces 13b.

A face 14b of the cutout part 14a which is touched by part that is included in a sliding face 15a of the adjustment part 15 which will be described later, and is parallel to an occlusal plane 10a (see Fig. 3B) is formed so as to be parallel to the occlusal plane 10a.

The adjustment part 15 is made to include at least all the occlusal surfaces 13b of the try-in denture on the upper jaw side 11, and include the sliding face 15a that touches the face 14b of the cutout part 14a of the base part 14 and at least part of which has a plane parallel to the occlusal plane 10a. Thus, the adjustment part 15 includes all or part of the dentition part 13, and may include part of the denture base part 12.

The gap for adjustment 11a is formed for the adjustment part 15 so that another face 15b that is a face different from the sliding face 15a and is arranged so as to be opposite to a face constituting the cutout part 14a of the base part 14 does not touch the base part 14 when the other face 15b is provided. Whereby, adjustment can be performed by sliding and/or rotating the adjustment part 15 with respect to the base part 14.

In contrast, the try-in denture on the lower jaw side 21 is a try-in denture for a lower jaw. The try-in denture on the lower jaw side 21 can be on the same approach as the try-in denture on the upper jaw side 11. Thus, the same reference signs as the try-in denture on the upper jaw side 11 are added to the try-in denture on the lower jaw side 21, and description thereof will be omitted.

The try-in dentures 10 having the structure as descried above are, for example, combined as follows, and make it possible to adjust a bite.

In the try-in denture on the upper jaw side 11, the adjustment part 15 is arranged on the cutout part 14a of the base part 14. At this time, the sliding face 15a of the adjustment part 15 touches the face 14b of the cutout part 14a. The other face 15b is arranged so as not to touch any face of the cutout part 14a, which results in formation of the gap for adjustment 11a.

Likewise, in the try-in denture on the lower jaw side 21, the adjustment part 15 is arranged on the cutout part 14a of the base part 14. At this time, the sliding face 15a of the adjustment part 15 touches the face 14b of the cutout part 14a. The other face 15b is arranged so as not to touch any face of the cutout part 14a, which results in formation of the gap for adjustment 11a.

The try-in denture on the upper jaw side 11 and the try-in denture on the lower jaw side 21 are arranged so that their occlusal surfaces 13a face each other, to form the try-in dentures 10.

In the try-in dentures 10 as described above, the adjustment part 15 can be moved in the direction parallel to the occlusal plane 10a as shown by A in Fig. 1 and B in Fig. 2, and the adjustment part 15 can be rotated within the plane of the sliding face 15a, which is parallel to the occlusal plane 10a, as shown by C in Fig. 4.

Moving and/or rotating the adjustment part 15 as described above makes it possible to adjust a bite of the try-in denture on the upper jaw side 11 and the try-in denture on the lower jaw side 21. Thus, according to the try-in dentures 10, an individual interocclusal relation between artificial tooth parts 13a on the upper jaw and those on the lower jaw is not changed since the whole of the dentition is moved and/or rotated, which makes it unnecessary to individually adjust the artificial tooth parts 13a. Whereby, only the relation between the adjustment part 15 and the base part 14 of a jaw, which is determined to be improper, is modified, which makes it possible to adjust a bite in a very easy way.

Since, in most cases, an occlusal surface formed in an artificial tooth is originally designed to have a proper shape, it is undesirable even in view of intraoral functions such as chewing to unnecessarily grind when dentures are applied because of a difference when a bite is registered or no dentition at a position at which the dentition should be by rights with respect to a residual ridge. Using the try-in dentures of the present embodiment makes the probability of spoiling a chewing function of an occlusal surface formed on an artificial tooth as low as possible, which leads to occlusal adjustment according to a patient's mandibular movement in a state where a good shape of the occlusal surfaces is kept in dentures.

In the present embodiment, each of the try-in denture on the upper jaw side 11 and the try-in denture on the lower jaw side 21 is separated into the base part 14 and the adjustment part 15. Both of them are not necessarily separated as long as at least one of the try-in denture on the upper jaw side 11 and try-in denture on the lower jaw side 21 is separated into the base part 14 and the adjustment part 15.

Concerning the adjustment part 15, not all the artificial teeth necessarily exist as one adjustment part. For example, the adjustment part 15 may be divided into three of molar regions (right and left sides) and an anterior teeth region (between two dog teeth). That is, the adjustment part 15 may be divided into a plurality of adjustment parts optionally.

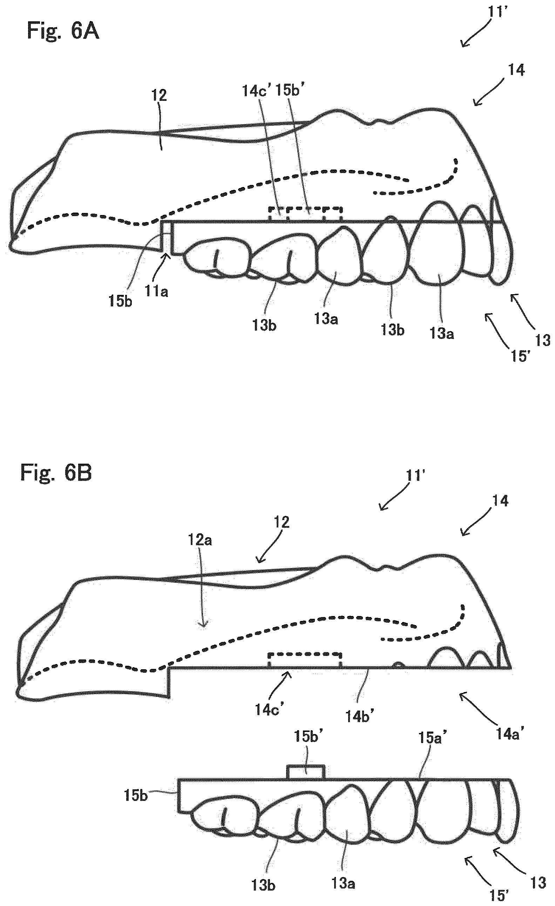

As long as at least part of the sliding face 15a of the adjustment part 15 is parallel to the occlusal plane 10a, the other part thereof may form unevenness etc. This makes it possible to regulate a movement and a rotation of the adjustment part 15, to prevent the adjustment part 15 from moving too much and from being rotated too much, and to improve easiness of occlusal adjustment. For example, Figs. 6A and 6B show a try-in denture on the upper jaw side 11' which is a modification. This try-in denture on the upper jaw side 11' includes a protrusion 15b' on its sliding face 15a', and a recess part 14c' is arranged on a cutout part 14a' of the base part 14 at a position corresponding to the protrusion 15b'. This protrusion 15b' is arranged so as to be inserted into the recess part 14c'. At this time, the recess part 14c' is formed so that the size thereof is larger than the protrusion 15b'.

According to the try-in denture on the upper jaw side 11' of such an embodiment, when the adjustment part 15' is moved and rotated to adjust occlusal conditions, this movement and rotation are restricted to a range where the protrusion 15b' can move and rotate in the recess part 14c', which makes it possible to prevent the movement and rotation beyond a predicted range, and to achieve easy operation.

Next, a method for making the dentures 30 using the try-in dentures 10 will be described. In this description, a program for making the try-in dentures 10 will be also descried.

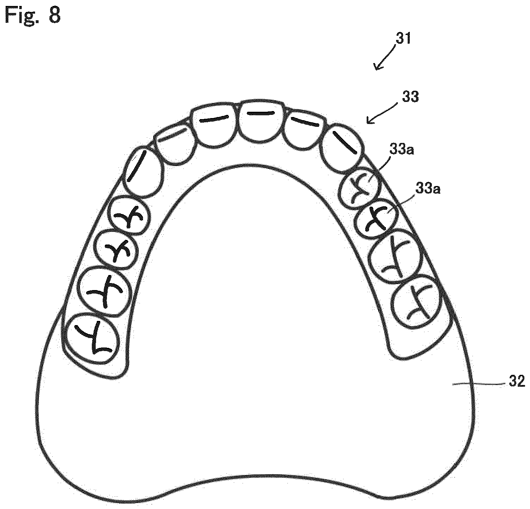

Fig. 7A is a side view of the dentures 30, Fig. 7B is a front view of the dentures 30, and Fig. 8 is a front view of a denture on the upper jaw side 31 of the dentures 30 on the side of the dentition 33. The dentures 30 as described above are intraorally arranged on the sides of lower and upper jaws of a patient, and artificially compensate for lost natural teeth. As is seen from Figs. 7A to 8, the dentures 30 include the denture on the upper jaw side 31 and a denture on the lower jaw side 41. The denture on the lower jaw side 41 can be on the same approach as the denture on the upper jaw side 31. Thus, the same reference signs are added to members constituting the denture on the lower jaw side 41, and description thereof will be omitted.

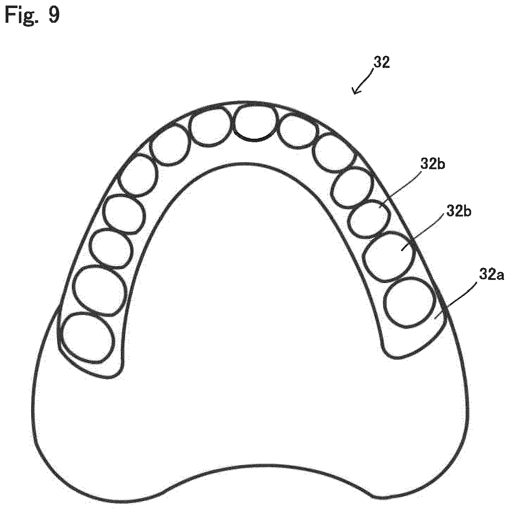

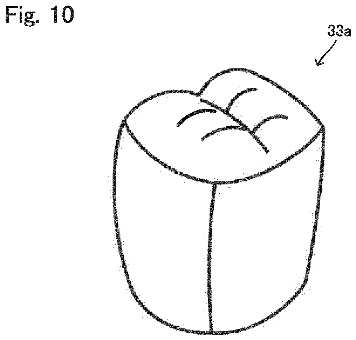

As is seen from Figs. 7A to 8, each of the denture on the upper jaw side 31 and the denture on the lower jaw side 41 includes the denture base 32 and the artificial dentition 33 of arranging a plurality of the artificial teeth 33a, to form the dentures 30. Fig. 9 shows the denture base 32, and Fig. 10 shows an external appearance of one artificial tooth 33a according to one example.

The denture base 32 is a member that has functions of holding the artificial teeth 33a at predetermined positions, and stably fitting the dentures 30 onto an oral mucosa. In this embodiment, as is seen from Fig. 9, the denture base 32 includes a ridge part 32a that rises like a ridge as a portion where the artificial teeth 33a are arranged, and the top part of this ridge part 32a is provided with recess parts 32b into each of which one end of each artificial tooth 33a is inserted to fix the artificial teeth 33a.

Since the denture base 32 is, as described later, made by cutting, any hard material such as hard resins, metals, and sintered ceramics is preferably employed.

Each artificial tooth 33a is an artificial tooth that is made so as to have functions of a lost natural tooth instead of the natural tooth. One end of the artificial tooth 33a is inserted into the recess part 32b of the denture base 32 to be fixed with an adhesive, to hold the artificial tooth 33a. Whereby, a plurality of the artificial teeth 33a are arranged arcuately like a denture, to form the artificial denture 33, to be able to function as natural teeth.

Here, any known material used for an artificial tooth can be employed for the artificial tooth 33a. Examples thereof include ceramics, resins, hard resins and metals.

Any known material may be used as a material with which the artificial tooth 33a adhere to the denture base 32. Examples thereof include quick cure resins, resins of a gingival color, resins for a denture base, known industrial adhesives such as an epoxy adhesive, or at least two or more of them in combination.

Here, a means for preventing the artificial tooth 33a from rotating when the artificial tooth 33a is arranged on the denture base 32 may be provided. Examples include a manner of providing a noncircular protrusion for the artificial tooth 33a and providing a hole into which this protrusion is inserted on the side of the recess part 32b.

Next, a method for making the dentures 30 of the above described embodiment will be described.

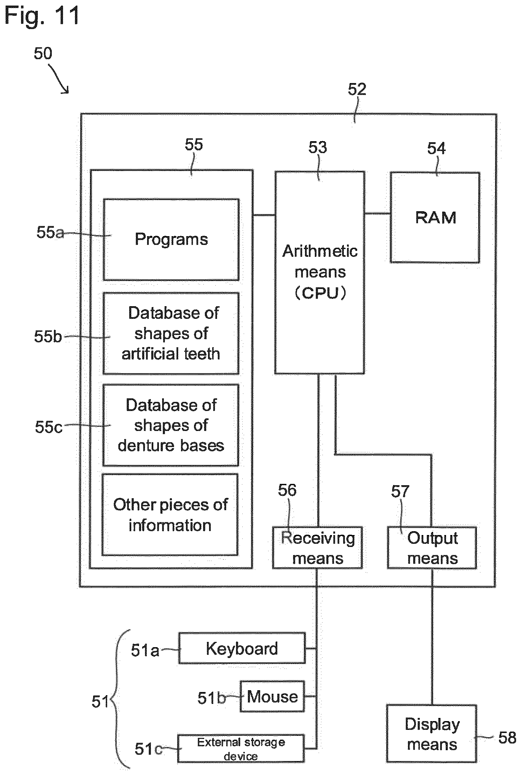

Fig. 11 is a conceptual block diagram of a configuration included in an apparatus for designing dentures 50 according to one embodiment. The apparatus for designing dentures 50 (hereinafter may be referred to as "design apparatus 50") includes an input means 51, an arithmetic unit 52 and a display means 58. The arithmetic unit 52 includes an arithmetic means 53, RAM 54, a memory means 55, a receiving means 56 and an output means 57. The input means 51 includes a keyboard 51a, a mouse 51b and an external storage device 51c that operates as one storage medium.

The arithmetic means 53 is a means configured by a so-called central processing unit (CPU), and connected to each of the above described components, to be able to control the components. The arithmetic means 53 also executes varieties of programs 55a stored in the memory means 55 that operates as a storage medium etc., and based on this, carries out arithmetic operations as means for generating varieties of data and selecting data which will be described later.

The RAM 54 is a component operating as a working area for the arithmetic means 53 and as a memory means for temporary data. The RAM 54 may be configured by SRAM, DRAM, a flash memory or the like and is the same as known RAM.

The memory means 55 is a member operating as a storage medium in which programs and data that are the bases of varieties of arithmetic operations are saved. Intermediate and final results of various kinds obtained by execution of programs may be able to be saved in the memory means 55. More specifically, programs 55a, a database of shapes of artificial teeth 55b and a database of shapes of denture bases 55c are stored (saved) in the memory means 55. Other pieces of information may be saved therein together as well.

The programs 55a are programs necessary for operating the design apparatus 50 and are not specifically limited.

The database of shapes of artificial teeth 55b is a database of storing information including shapes concerning artificial teeth. Types of shapes of artificial teeth stored in the database are not especially limited. Data may be stored in a manner where upper and lower dentures each of which a plurality of artificial teeth are included in as one group occlude each other. This data may be configured so as to be able to be treated by one artificial tooth, and in addition by a divided unit including some artificial teeth.

Plural variations of such groups of artificial teeth for matching patients' characteristics such as "sex" and "physique" are preferably prepared.

The embodiment of the means for regulating a rotation is also stored in the database of shapes of artificial teeth 55b.

The database of shapes of denture bases 55c is a database of storing information on shapes etc. concerning denture bases. Manners in which data concerning denture bases is stored in the database are not especially limited. Three or four variations of data on sizes which respectively match sizes of artificial teeth may be preferable.

The embodiment of the means for regulating a rotation when an artificial tooth is arranged on a denture base as described above may be also stored in the database of shapes of denture bases 55c.

The receiving means 56 is a component having a function of properly taking information from the outside into the arithmetic unit 52, and the input means 51 is connected thereto. The receiving means 56 includes a so-called input port, input connector, etc.

The output means 57 is a component having a function of properly outputting information in the obtained results which should be outputted to the outside, to the outside. The display means 58 such as a monitor, and various devices are connected thereto. The output means 57 includes a so-called output port, output connector, etc.

The input means 51 includes, for example, the keyboard 51a, the mouse 51b, the external storage device 51c, etc. Any known ones may be employed as the keyboard 51a and the mouse 51b, and the description thereof is omitted.

The external storage device 51c is a known externally-connectable storage means, and also operates as a storage medium. Various necessary programs and data can be stored therein without any limitation. For example, the same program and data stored in the memory means 55 may be stored therein. Impression data, data on occlusal relationships, etc. which are the basis when the arithmetic unit 52 generates data may be stored in the external storage device 51c.

Any known device may be employed as the external storage device 51c. Examples thereof include CD-ROM and a CD-ROM drive, DVD and a DVD drive, a hard disk, and various kinds of memories.

In addition, information may be provided for the arithmetic unit 52 by a network or communication via the receiving means 56. Likewise, information may be transmitted to an external device (for example, an NC machine tool) by a network or communication via the output means 57.

Next, a method for producing the try-in dentures 10 and the dentures 30 using the design apparatus 50, S1 (may be referred to as "production method S1") will be described. While the example of using the design apparatus 50 will be described here for understandability, the production method is not limited thereto, and can be carried out with any other apparatus only as long as such an apparatus can realize the method including the following points.

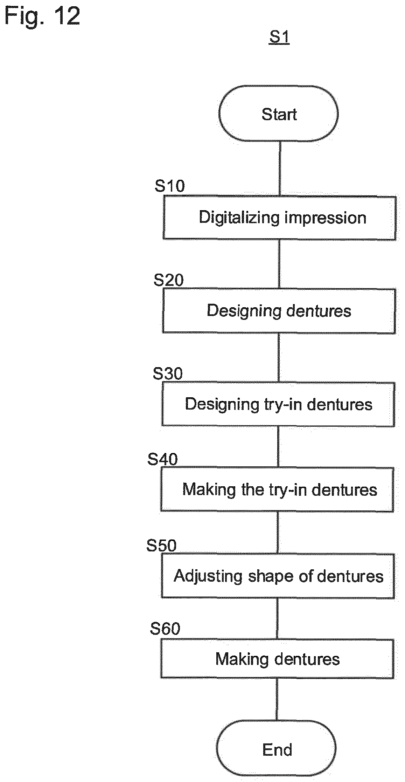

Fig. 12 shows the flow of the production method S1. As is seen from this, the production method S1 includes a step of digitalizing an impression S10, a step of designing dentures S20, a step of designing try-in dentures S30, a step of making the try-in dentures S40, a step of adjusting a shape of the dentures S50, and a step of making the dentures S60. Hereinafter each step will be described.

The step S10 is a step of obtaining CAD data of data on shapes, and of occlusal relationships from an obtained impression. The impression itself is taken with a known method. From this, information on surfaces of patient's mucosae can be obtained by measurement of a plaster cast, an impression, and the like.

A method of obtaining CAD data can be carried out with a known apparatus. Examples thereof include a three-dimensional optical scanner. In contrast, data on occlusal relationships can be obtained by three-dimensional measurement on patient's occlusal conditions or ideal position of jaws reproduced by intraorally linking an impression of an upper jaw and an impression of a lower jaw with a bite registration material directly, by bite registration for moving to an articulator, or the like.

The step S20 is a step of temporarily determining the shape of dentures on data depending on the information on surfaces of patient's mucosae obtained in the step S10, and the databases stored in the design apparatus 50. Each arithmetic operation carried out in the step S20 in this embodiment is executed in the design apparatus 50. That is, the step S20 progresses by the arithmetic means 53 carrying out arithmetic operations in accordance with the programs 55a stored in the memory device 55 included in the design apparatus 50.

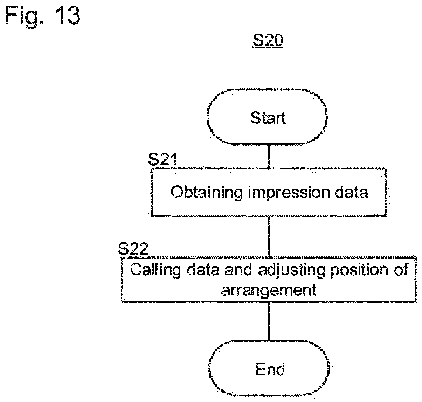

Fig. 13 shows the flow of the step S20. As is seen from this, the step S20 includes a step S21 of obtaining the impression data, and a step S22 of calling data and adjusting a position of arrangement.

The step S21 is a step of obtaining the information on impressions, which is digitalized in the step S10, and taking the information into the design apparatus 50. This taking is stored in the memory device 55 via the receiving means 56 of the design apparatus 50.

The step S22 is a step of calling information from the databases and arranging artificial teeth on the design apparatus 50. That is, based on the taken information so far, data on artificial teeth suitable for a dental arch is called from the databases stored in the memory means 55 of the design apparatus 50. This data is roughly arranged at a position on a residual ridge, and thereafter the position is finely adjusted.

Returning to Fig. 12, the step S30 will be described. In the step S30, the shape of the try-in dentures 10 is made based on the shape of the dentures which is temporarily determined in the step S20. Specifically, at least one of the try-in denture on the upper jaw side 11 and the try-in denture on the lower jaw side 21 is separated into the base part 14 and the adjustment part 15 like the above described try-in dentures 10.

Concerning places where the base part 14 and the adjustment part 15 are separated, a place that includes all the occlusal surfaces 13b, and where a residual ridge of a mucosal surface does not interfere with the adjustment part 15 is defined as the standard of separation on the sliding face 15a, and the aftermost part including at least the occlusal surfaces 13b of all the artificial tooth parts 13a is defined as the standard of separation on the other face 15b.

Since being to be a face of moving and/or rotating, the sliding face 15a is preferably parallel to the occlusal plane 10a. At this time, if the sliding face 15a is in the vicinity of the occlusal surfaces 13b, there is no contact between adjacent teeth, which makes it difficult to obtain a mass of an adjustment part. Thus, a place further from the occlusal plane 10a is more preferably selected in the place satisfying the standard of separation on the sliding face 15a.

In contrast, the gap for adjustment 11a as described above within a range of 2 mm to 3 mm may be set for the other face 15b assuming that the adjustment part 15 is moved backward. When any gap for adjustment is not provided, the adjustment part 15 or the base part 14 is ground, to modify the positional relationship.

Each arithmetic operation carried out in the step S30 in the present embodiment is executed in the design apparatus 50. That is, the step S30 progresses by the arithmetic means 53 carrying out arithmetic operations in accordance with the programs 55a stored in the memory device 55 included in the design apparatus 50.

In the step S40, try-in dentures are made based on the data on shapes of try-in dentures, which is determined in the step S30. Processing data for try-in dentures which is outputted in the step S30 is received, and the shapes are layered or cut out with a 3D printer or a machine tool and are also combined, to be finished as the try-in dentures 10. That is, command data to a 3D printer or a machine tool which is outputted in the step S30 is received, and based on this, the try-in dentures 10 are made with a 3D printer or a machine tool by layering or cutting. Here, any known 3D printer and machine tool may be employed, and are not specifically restricted. Any known 3D printer and NC machine tool may be employed.

Each arithmetic operation carried out in the step S40 in the present embodiment is executed in the design apparatus 50. That is, the step S40 progresses by the arithmetic means 53 carrying out arithmetic operations in accordance with the programs 55a stored in the memory device 55 included in the design apparatus 50.

The try-in dentures 10 made as described above are arranged inside a patient's oral cavity by a dentist or the like, and occlusal conditions are adjusted. The occlusal conditions can be adjusted by, as described above, moving and/or rotating the adjustment part 15 with respect to the base part 14. The result of the adjustment is obtained as data. The data of the result of the adjustment includes, for example, the amounts of the movement and the rotation of the adjustment part 15.

In the step S50, the amounts of the movement and the rotation of the adjustment part 15 obtained in the adjustment are taken in, and based on this, the data on dentures made in the step S20 is modified, and the shape of the dentures is adjusted on the data. Whereby, the shape of the dentures is determined. Means for taking-in are considered to be a method of reflecting a value directly measured with a caliper or the like on CAD, a method of obtaining data on part of the shape with a 3D optical scanner to perform alignment on CAD, etc., which may be carried out with any means.

In the step S50, data on artificial teeth is deleted from the determined data on the dentures, and processing data for cutting a denture base is outputted to the step of making the dentures S60 (machine tool).

Each arithmetic operation carried out in the step S50 in the present embodiment is executed in the design apparatus 50. That is, the step S50 progresses by the arithmetic means 53 carrying out arithmetic operations in accordance with the programs 55a stored in the memory device 55 included in the design apparatus 50.

The step S60 is a step of receiving the processing data for the dentures, which is outputted in the step S50, cutting out the shapes with a machine tool, and combining them to be finished as the dentures 30.

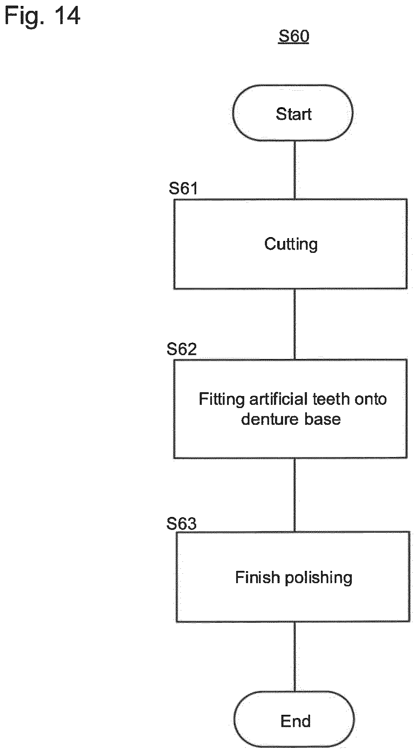

Fig. 14 shows the flow of the step S60. As is seen from Fig. 14, the step S60 includes a step of cutting S61, a step of fitting artificial teeth onto a denture base S62, and a step of finish polishing S63.

The step S61 is a step of receiving the command data for a machine tool, which is outputted in the step S50, and based on this, cutting out the denture bases 32 with a machine tool by cutting. Here, any known machine tool may be employed and is not especially limited. Any known NC machine may be employed. Material of the denture bases used here is constituted of a hard material such as hard resins, metals and ceramics. Thus, cutting can be carried out properly and accurately.

The step S62 is a step of fitting the artificial teeth 33a to the denture bases 32 obtained in the step S61. The artificial teeth 33a are arranged in the recess parts 32b of the denture bases 32 to be fixed with an adhesive.

In the step S63, finish grinding is carried out on the dentures obtained in the step S62, and finally the dentures 30 are obtained.

As described above, according to the production method S1, occlusal adjustment can be carried out without much effort or time with high accuracy.

### Reference Signs List

10 try-in dentures
10a occlusal plane
11 try-in denture on the upper jaw side
11a gap for adjustment
12 denture base part
13 dentition part
13a artificial tooth part
13b occlusal surface
14 base part
14a cutout part
15 adjustment part
15a sliding face
30 dentures
32 denture base
32a ridge part
32b recess part
33 artificial dentition
33a artificial tooth

## Claims

1. A try-in denture to adjust an occlusal position for making a denture, the try-in denture comprising:
a denture base part;
a dentition part;
an adjustment part; and
a base part, the adjustment part and the base part being separable,
wherein the adjustment part includes all of occlusal surfaces of the dentition part, and a face parallel to an occlusal plane, the adjustment part being formed so that a movement of the adjustment part parallel to the occlusal plane with respect to the base part can be performed, a rotation of the adjustment part in the face parallel to the occlusal plane can be performed, or both the movement and the rotation can be performed.

2. The try-in denture according to claim 1, wherein
the adjustment part includes a part that engages the base part, and restricts at least one of the movement and the rotation within a predetermined range.

3. A program for making a try-in denture to adjust an occlusal position for making a denture, the program comprising:
separating data on an adjustment part and a base part from data on a denture base part and a dentition part,
wherein the adjustment part includes all of occlusal surfaces of the dentition part, and a face parallel to an occlusal plane, the adjustment part being formed so that a movement of the adjustment part parallel to the occlusal plane with respect to the base part can be performed, a rotation of the adjustment part in the face parallel to the occlusal plane can be performed, or both the movement and the rotation can be performed.

4. A method for producing a denture, the method comprising:
making a try-in denture to adjust an occlusal position,
wherein the try-in denture includes a denture base part, a dentition part, an adjustment part, and a base part, the adjustment part and the base part being separable, and
the adjustment part includes all of occlusal surfaces of the dentition part, and a face parallel to an occlusal plane, the adjustment part being formed so that a movement of the adjustment part parallel to the occlusal plane with respect to the base part can be performed, a rotation of the adjustment part in the face parallel to the occlusal plane can be performed, or both the movement and the rotation can be performed.
